# EUROPÄISCHE PATENTANMELDUNG

(11) **EP 2 148 098 A2**
(43) Veröffentlichungstag der Anmeldung: **27.01.2010**
(21) Anmeldenummer: 09163777.7
(22) Anmeldetag: 25.06.2009
(51) Int. Cl.: F16B 3/00, F16B 43/00

(54) **Ringscheibenförmiges Verankerungselement**

(30) Priorität: 24.07.2008 DE 102008040677
(71) Anmelder: HILTI Aktiengesellschaft, 9494 Schaan (LI)
(72) Erfinder: Bianchi, Pietro, 6800, Feldkirch (AT); Tognini, Roger, 9435, Heerbrugg (CH); Sander, Bernhard, 81379, München (DE); Lutz, Clemens, 9470 Buchs (CH); Appl, Jörg, 9470 Buchs (CH)

(57) **Zusammenfassung**

Ein ringscheibenförmiges Verankerungselement (11) zur Anordnung an einem mit einer Aussenprofilierung versehenen Schaft weist eine Durchführöffnung (12) für den Schaft sowie eine zur Durchführöffnung (12) hin offene und zu dieser radial aussenliegende Ausgleichsausnehmung (13) auf

## Beschreibung

Die Erfindung betrifft ein ringscheibenförmiges Verankerungselement zur Anordnung an einem mit einer Aussenprofilierung versehenen Schaft eines Befestigungselementes mit einer Durchführöffnung für den Schaft. Weiter betrifft die Erfindung ein mittels einer aushärtbaren Masse in einem Bohrloch verankerbares Befestigungselement, das zumindest ein ringscheibenförmiges Verankerungselement aufweist, sowie eine Befestigungsanordnung mit einem derartigen Befestigungselement.

Es ist bekannt, Befestigungselemente mit einem eine Aussenprofilierung aufweisenden Schaft mittels einer aushärtbaren Masse, welche vor dem Einführen oder nach dem Einführen des Befestigungselementes in das Bohrloch in dieses eingebracht wird, chemisch im Bohrloch zu verankern. Das Befestigungselement ist beispielsweise eine Gewindestange, die über ihre gesamte Längserstreckung mit einem Gewinde als Aussenprofilierung versehen ist. Wird dieses Befestigungselement chemisch verankert, kann das Versagen des Befestigungspunktes entlang des Kontaktbereichs zwischen dem Schaft und der ausgehärteten Masse oder aber entlang des Kontaktbereichs zwischen der Bohrlochwandung und der ausgehärteten Masse auftreten.

Durch Reinigung des Bohrlochs und insbesondere der Bohrlochwandung kann die Haftung der ausgehärteten Masse an der Bohrlochwandung und somit die Verankerung des Befestigungselementes im Bohrloch verbessert werden. Die Reinigung des Bohrlochs stellt einen zusätzlichen Arbeitsaufwand dar, welcher zudem für ein vorteilhaftes Ergebnis separate Hilfsmittel erfordert, die dem Anwender nicht immer zur Verfügung stehen.

Aus der US 1,688,087 ist ein mittels einer aushärtbaren Masse in einem Bohrloch verankerbares Befestigungselement bekannt, das einen Schaft mit einem Gewinde als Aussenprofilierung sowie mehrere ringscheibenförmige Verankerungselemente mit jeweils einer Durchführöffnung für den Schaft und mit jeweils einem Aussendurchmesser aufweist, der grösser als der Nenndurchmesser des Bohrlochs ist. Das Befestigungselement wird als Ganzes, d. h. mit den am Schaft angeordneten Verankerungselementen, in das Bohrloch eingeführt. Die ringscheibenförmigen Verankerungselemente schaffen eine mechanische Verankerung des Befestigungselementes im Bohrloch bis die beispielsweise vor oder nach dem Einführen des Befestigungselementes eingebrachte aushärtbare Masse für eine Verankerung des Befestigungselements im Bohrloch ausreichend ausgehärtet ist. Zudem bewirken die Verankerungselemente eine Bewehrung der ausgehärteten Masse, was zusätzlich höhere Auszugswerte ermöglicht.

Nachteilig an der bekannten Lösung ist, dass aufgrund der Aussenprofilierung des Schafts die ringscheibenförmigen Verankerungselemente im angeordneten Zustand leicht zu einer in Bezug auf die Schaftlängsachse senkrechte Ebene geneigt sind, weshalb der aus dem Bohrloch ragende Schaftabschnitt nach dem Setzen des Befestigungselements nicht senkrecht von der Oberfläche des Bauteils abragt. Eine nachträgliche Justierung des Schafts ist, wenn überhaupt, nur bedingt möglich, da diese entgegen einer von dem zumindest einen Verankerungselement erzeugten Gegenkraft erfolgt.

Aufgabe der Erfindung ist es, einerseits ein Verankerungselement zu schaffen, das einfach an einem Schaft mit einer Aussenprofilierung montierbar ist und den Setzaufwand eines Befestigungselementes reduziert. Ferner soll ein chemisch verankerbares Befestigungselement mit zumindest einem Verankerungselement sowie eine Befestigungsanordnung mit einem derartigen Befestigungselement geschaffen werden, bei denen der Setzaufwand reduziert ist.

Diese Aufgabe ist für ein Verankerungselement, für ein Befestigungselement und für eine Befestigungsanordnung durch die Merkmale der unabhängigen Ansprüche gelöst. Vorteilhafte Weiterbildungen sind in den Unteransprüchen dargelegt.

Gemäss der Erfindung ist zumindest eine zur Durchführöffnung hin offene und zu dieser radial aussenliegende Ausgleichsausnehmung vorgesehen.

Mit der zumindest einen Ausgleichsausnehmung lässt sich eine Steigung der Aussenprofilierung am Schaft ausgleichen, so dass das Verankerungselement im angeordneten Zustand im Wesentlichen senkrecht bzw. in einer radial vom Schaft abragenden Ebene ausgerichtet ist. Die von dem Verankerungselement aufgespannte Hauptebene schliesst mit der Schaftlängsachse im montierten Zustand des Verankerungselements an einem Schaft einen Winkel von nahezu 90° ein. Die zumindest eine Ausgleichsausnehmung schliesst sich an die radiale Begrenzung der Durchführöffnung an und erstreckt sich nach radial aussen. Vorteilhaft ist die zumindest eine Ausgleichsausnehmung als Kerbe oder als einseitig begrenzter Schlitz ausgebildet. Eine Justierung eines zumindest ein Verankerungselement aufweisendes Befestigungselementes nach dem Setzen in einem Bohrloch erübrigt sich in den meisten Fällen beziehungsweise ist leicht vorzunehmen.

Die Durchführöffnung weist vorteilhaft eine auf den Schaft des Befestigungselementes abgestimmte Form auf und kann somit auch eine von einem Kreis abweichende Ausgestaltung aufweisen. Vorteilhaft ist die Durchführöffnung konzentrisch zu der den äusseren Umfang des Verankerungselementes bildenden Hülllinie angeordnet. In einer alternativen Ausführung ist die Durchführöffnung versetzt zu einer konzentrischen Anordnung vorgesehen, so dass die Breite des Materialabschnitts zwischen der radialen Begrenzung der Durchführöffnung und der den äusseren Umfang des Verankerungselementes bildenden Hülllinie in Umfangrichtung variiert.

Vorzugsweise ist der äussere Umfang des Verankerungselementes mit einer Profilierung versehen, welche eine einfache Anpassung des Verankerungselementes an die Ausgestaltung des Bohrlochs gewährleistet. Beispielsweise wird die Profilierung durch nach radial aussen offene Ausnehmungen gebildet. Die Ausnehmungen sind vorteilhaft als einseitig begrenzte Schlitze ausgebildet, die sich ausgehend vom äusseren Umfang in Richtung des Scheibenmittelpunkts erstrecken. Die zwischen den Ausnehmungen liegenden Abschnitte des Verankerungselementes bilden leicht auslenkbare Lamellen aus, womit auch bei einem Verankerungselement aus einem sehr steifen Material die Anpassbarkeit an ein Bohrloch beim Einführen in dasselbe gegeben ist. In einer vorteilhaften, flexiblen Ausführung des Verankerungselementes überlappen sich die zumindest eine Ausgleichsausnehmung und die Ausnehmungen für die Profilierung zumindest bereichsweise. Weiter vorteilhaft sind unterschiedliche Arten von Ausnehmungen am äusseren Umfang des Verankerungselementes vorgesehen. Beispielsweise sind eine erste Art von Schlitzen vorgesehen, welche am äusseren Umfang bewegliche Lamellen ausbilden, und zwischen diesen Schlitzen eine zweite Art von Schlitzen vorgesehen, welche den dazwischen liegenden Rand des Verankerungselementes auffächern.

Bevorzugt weist das Verankerungselement in der Scheibenebene eine wellige Ausgestaltung auf, welche trotz der zumindest einen Ausgleichsausnehmung eine ausreichende Steifigkeit des Verankerungselementes insbesondere beim Einführen in ein Bohrloch gewährleistet.

Für eine vorteilhafte Verankerung des Verankerungselementes an der Wandung des Bohrlochs beziehungsweise zur Fixierung am Schaft beträgt die Dicke des Verankerungselementes vorteilhaft 0.01 mm bis 2 mm, besonders vorteilhaft 0.05 mm bis 1 mm.

Vorzugsweise weist das Verankerungselement in der Scheibenebene unterschiedliche Dicken auf, womit sich das Verformungsverhalten des Verankerungselementes insbesondere beim Einführen in ein Bohrloch vorteilhaft anpassen lässt. In einer besonders vorteilhaften Ausführung nimmt die Dicke ausgehend von der Durchführöffnung in radialer Richtung nach aussen zu, so dass im Kontaktbereich des Verankerungselementes mit der Bohrlochwandung eine vorteilhaft grosse Materialmenge für eine mechanische Verankerung des Befestigungselementes zur Verfügung steht. In einer anderen vorteilhaften Ausführung nimmt die Dicke ausgehend vom äusseren Umfang in radialer Richtung zur Durchführöffnung zu, so dass im Kontaktbereich des Verankerungselementes mit dem Schaft eine vorteilhaft grosse Materialmenge für die Fixierung des Verankerungselementes am Schaft zur Verfügung steht. Weiter kann die Dicke des Verankerungselementes auch einerseits ausgehend von der Durchführöffnung in radialer Richtung nach aussen sowie andererseits ausgehend vom äusseren Umfang in radialer Richtung zur Durchführöffnung zunehmen, so dass der Bereich des Verankerungselementes mit der grössten Materialdicke zwischen dem äusseren Umfang und der Durchführöffnung liegt.

Bevorzugt ist zumindest eine Durchgangsöffnung für eine aushärtbare Masse im Verankerungselement vorgesehen, damit beim Einführen des Verankerungselements in ein zuvor befülltes Bohrloch der verdrängte Anteil der aushärtbaren Masse einfach das Verankerungselement durchdringen und vollständig umhüllen kann. Wird das Bohrloch erst nach dem Einführen eines Befestigungselementes befüllt, kann durch die zumindest eine Durchgangsöffnung die eingegossene Masse weitgehend unbehindert bis zum Bohrlochgrund fliessen. In einer vorteilhaften Ausführung ist die zumindest eine Durchgangsöffnung am äusseren Umfang des Verankerungselementes vorgesehen. Alternativ oder ergänzend dazu wird im Verankerungselement zumindest eine, umfänglich geschlossene Durchgangsöffnung für die aushärtbare Masse vorgesehen.

Vorzugsweise ist das Band aus einem Metall, vorteilhaft aus einem Stahlblech gefertigt, womit das Verankerungselement eine ausreichende Steifigkeit aufweist. Eine einfache und wirtschaftliche Herstellung des Verankerungselementes lässt sich insbesondere mit einem Stanz-/Biegeverfahren gewährleisten.

In einer alternativen, erfindungsgemässen Ausführungsform ist das Band aus einem Kunststoff, vorteilhaft aus einem faserverstärktem Kunststoff gefertigt. Eine einfache und wirtschaftliche Herstellung des Verankerungselementes lässt sich insbesondere mit einem Spritzgussverfahren gewährleisten.

In einer vorteilhaften Ausführung ist das Verankerungselement aus einem nicht leitenden Material gefertigt. In Anwendungen, in denen keine Ströme übertragen werden sollen, z. B. bei Befestigungen von Eisenbahnschwellen, gewährleistet das bandförmige Verankerungselement einen ausreichenden Abstand zwischen dem Schaft und der Bohrlochwandung und ein Fliessen von Strom von dem Bauteil in den Schaft des Befestigungselementes.

In einer Alternative kann das Band aus einem anderen Material als Metall oder Kunststoff gefertigt sein, sofern dieses Material eine ausreichende mechanische Verankerung eines Befestigungselementes im Bohrloch bis zum Aushärten der aushärtbaren Masse gewährleistet.

In einer vorteilhaften Ausführung ist das Verankerungselement aus einem nicht leitenden Material gefertigt. In Anwendungen, in denen keine Ströme übertragen werden sollen, z. B. bei Befestigungen von Eisenbahnschwellen, gewährleistet das Verankerungselement einen ausreichenden Abstand zwischen dem Schaft und der Bohrlochwandung.

Das erfindungsgemässe, mittels einer aushärtbaren Masse in einem Bohrloch verankerbare Befestigungselement, weist einen Schaft mit einer Aussenprofilierung und zumindest ein ringscheibenförmiges Verankerungselement mit einer Durchführöffnung für den Schaft auf, wobei zumindest eine zur Durchführöffnung hin offene und zu dieser radial aussenliegende Ausgleichsausnehmung vorgesehen ist.

Dieses Befestigungselement lässt sich einfach herstellen und ermöglicht eine einfache Montage in einem Bohrloch eines Bauteils, wie z. B. in einer Wand oder einer Decke. Die Aussenprofilierung ist beispielsweise ein Gewinde.

Das zumindest eine ringscheibenförmige Verankerungselement des Befestigungselements kann einzelne sowie auch sämtliche Merkmale des zuvor beschriebenen Verankerungselementes aufweisen.

Bevorzugt sind mehrere Verankerungselemente beabstandet zueinander an dem Schaft vorgesehen, womit eine vorteilhafte mechanische Verankerung des Befestigungselementes, eine einfache Ausrichtung des Befestigungselementes im Bohrloch sowie eine vorteilhafte Bewehrung der ausgehärteten Masse gewährleistet ist. Vorteilhaft sind die Verankerungselemente in regelmässigen Abständen zueinander am Schaft angeordnet. Vorzugsweise sind verschiedene Ausgestaltungen von Verankerungselementen an einem Schaft vorgesehen, womit sich in verschiedenen Verankerungstiefen unterschiedliche Verankerungseigenschaften bedarfsweise miteinander kombinieren lassen. Beispielsweise werden ringscheibenförmige Verankerungselemente mit hülsenförmigen oder schraubenförmigen Verankerungselementen an einem Schaft kombiniert.

Bevorzugt sind zumindest zwei ringscheibenförmige Verankerungselemente jeweils an einem ihrer Randabschnitte miteinander zu einer Verankerungseinheit verbunden, wobei der Schaft durch alle miteinander verbundenen ringscheibenförmigen Verankerungselemente hindurchgeführt ist. Für eine Verbindung der zumindest zwei ringscheibenförmigen Verankerungselemente sind diese beispielsweise in einem Stanz-/Biegeverfahren nicht vollständig voneinander getrennt worden oder über einen Befestigungspunkt, z. B. Löt- oder Klebepunkt, beziehungsweise über ein Klemm- oder Haltemittel miteinander verbunden. Vorteilhaft sind mehr als zwei ringscheibenförmige Verankerungselemente jeweils alternierend an gegenüberliegenden Randabschnitten miteinander verbunden. Besonders vorteilhaft lässt sich der Abstand der Verankerungselemente durch Zusammendrücken beziehungsweise durch Auseinaderziehen der Verankerungseinheit an das Befestigungselement oder an die Verankerungslänge in einem Bohrloch einfach anpassen.

Die erfindungsgemässe Befestigungsanordnung eines Befestigungselementes in einem Bohrloch, das einen Nenndurchmesser aufweist, mittels einer aushärtbaren Masse, umfasst ein Befestigungselement mit einem Schaft, der eine Aussenprofilierung aufweist, sowie mit zumindest einem ringscheibenförmigen Verankerungselement, das eine Durchführöffnung für den Schaft und einen Aussendurchmesser aufweist, der grösser als der Nenndurchmesser des Bohrlochs ist, wobei zumindest eine zur Durchführöffnung hin offene und zu dieser radial aussenliegende Ausgleichsausnehmung vorgesehen ist.

Beim Einführen des Befestigungselementes in das Bohrloch erfolgt durch das Streifen des Verankerungselementes entlang der Bohrlochwandung gleichzeitig eine Reinigung des Bohrlochs, wobei das anfallende Bohrmehl am Bohrlochgrund und gegebenenfalls in der aushärtbaren Masse gesammelt wird und nicht mehr zu einem grossen Teil in die Umgebungsluft entweicht. Eine separate Reinigung des Bohrlochs vor dem Setzen des Befestigungselementes ist nicht mehr erforderlich, wobei trotzdem hohe Endlasten mit dem verankerten Befestigungselement erreicht werden. Des Weiteren gewährleistet das zumindest eine Verankerungselement einen Spritzschutz beim Einführen des Befestigungselementes in das Bohrloch gegen herausspritzende aushärtbare Masse.

Durch den Wegfall des Reinigungsschritts wird die Anwendungssicherheit erhöht und das Setzen des Befestigungselementes beschleunigt. Es werden keine zusätzlichen Geräte benötigt und die Umgebungsluft wird nicht durch Bohrmehl zusätzlich belastet. Des Weiteren gewährleisten Befestigungselemente, insbesondere mit mehreren Verankerungselementen, eine ausreichende Überdeckung des Schafts entlang dessen gesamten Verankerungslänge mit der aushärtbaren Masse im Bohrloch.

Das zumindest eine ringscheibenförmige Verankerungselement beziehungsweise das Befestigungselement kann einzelne sowie auch sämtliche Merkmale des zuvor beschriebenen Verankerungselementes beziehungsweise des zuvor beschriebenen Befestigungselementes aufweisen.

Die Erfindung wird nachstehend anhand von Ausführungsbeispielen näher erläutert. Es zeigen:
- Fig. 1: Ein erstes Ausführungsbeispiel eines Verankerungselementes im Grundriss;
- Fig. 2: das in Fig. 1 gezeigte Verankerungselement in Seitenansicht;
- Fig. 3: ein zweites Ausführungsbeispiel eines Verankerungselementes im Grundriss;
- Fig. 4: eine Befestigungsanordnung mit einem Befestigungselement im Schnitt; und
- Fig. 5: eine Variante eines schematisch dargestellten Befestigungselementes in Seitenansicht.

Grundsätzlich sind in den Figuren gleiche Teile mit den gleichen Bezugszeichen versehen.

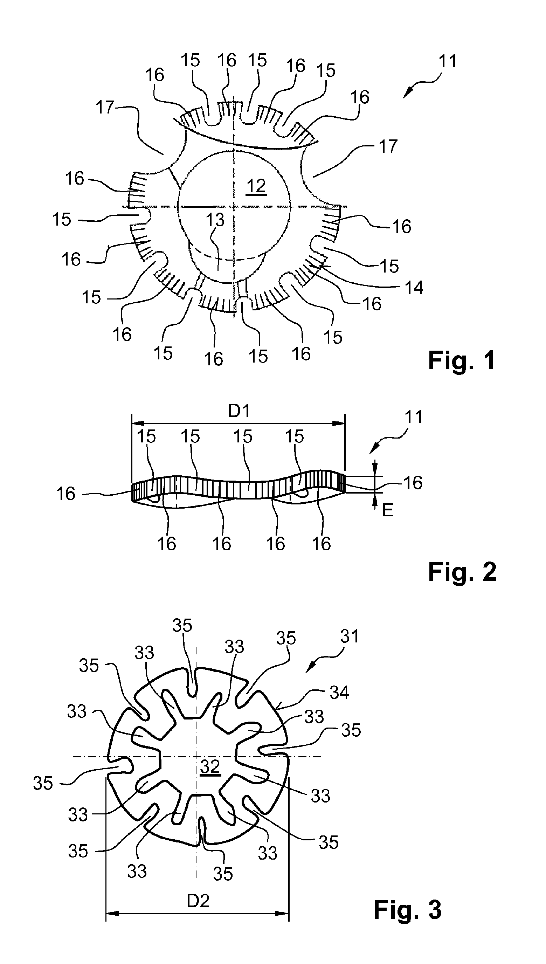

Das in den Figuren 1 und 2 dargestellte ringscheibenförmige Verankerungselement 11 weist eine Durchführöffnung 12 für einen Schaft und an der radialen Begrenzung der Durchführöffnung 12 eine Ausgleichsausnehmung 13 auf, welche durch eine nach radial innen offene Kerbe gebildet ist. Der äussere Umfang 14 des Verankerungselementes 11 ist mit einer Profilierung in Form von nach radial aussen offenen Ausnehmungen 15 versehen, welche mehrere leicht auslenkbare Lamellen ausbilden. Zwischen dem grössten Teil dieser Ausnehmungen 15 sind ausgehend vom äusseren Umfang 14 mehrere nach radial innen gerichtete Schlitze 16 vorgesehen, die den freien Rand des Verankerungselementes 11 bereichsweise auffächern und somit eine einfache Anpassung desselben an die Bohrlochwandung ermöglichen. Am äusseren Umfang 14 des Verankerungselementes 11 sind weiter zwei Durchgangsöffnungen 17 für eine aushärtbare Masse vorgesehen. Das Verankerungselement 11 weist einen Aussendurchmesser D1 auf.

Das Verankerungselement 11 weist in der Scheibenebene eine wellige Ausgestaltung auf (Fig. 2). Das Verankerungselement 11 weist in der Scheibenebene unterschiedliche Dicken auf, wobei in diesem Ausführungsbeispiel die Dicke ausgehend von der Durchführöffnung 12 in radialer Richtung nach aussen zunimmt.

Das Verankerungselement 11 ist aus einem Metall, vorteilhaft aus einem Stahlblech, in einem Stanz-/Biegeverfahren gefertigt.

Da das Verankerungselement 11 im gesetzten Zustand vollständig von der aushärtbaren Masse 43 umgeben sind, ist auch bei einer geringen Materialdicke E ein Ausknicken desselben unter Last bereits vor dem vollständigen Aushärten der aushärtbaren Masse 43 verhindert.

Das in der Figur 3 dargestellte ringscheibenförmige Verankerungselement 31 weist ebenfalls eine Durchführöffnung 32 für einen Schaft und an der radialen Begrenzung der Durchführöffnung 32 mehrere sich nach radial aussen erstreckende Schlitze als Ausgleichsausnehmungen 33 auf. Zur Ausbildung von leicht auslenkbaren Lamellen beziehungsweise einer Profilierung am äusseren Umfang 34 sind ausgehend vom äusseren Umfang 34 des Verankerungselementes 11 mehrere sich nach radial innen erstreckende Schlitze 35 vorgesehen. In der Grundrissprojektion überlappen sich die Ausgleichsausnehmung 33 und die Schlitze 35 bereichsweise. Das Verankerungselement 31 weist einen Aussendurchmesser D2 auf.

Das Verankerungselement 31 ist aus einem Kunststoff, vorteilhaft aus einem faserverstärkten Kunststoff, in einem Spritzgussverfahren gefertigt.

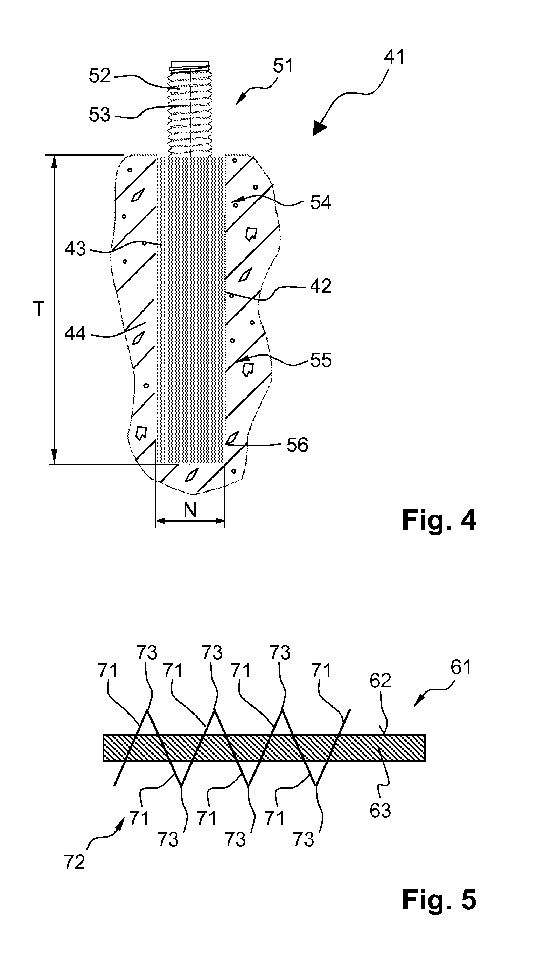

In der Figur 4 ist eine Befestigungsanordnung 41 zur Verankerung eines Befestigungselementes 51 in einem Bohrloch 42 mittels einer aushärtbaren Masse 43 gezeigt.

Das Befestigungselement 51 weist einen Schaft 52 mit einem Aussengewinde als Aussenprofilierung 53 sowie mehrere zueinander beabstandete Verankerungselemente 11 und 31 auf, die jeweils in zwei Gruppen 54 und 55 am Schaft 52 angeordnet sind. Die dem setzrichtungsseitigen Ende 56 des Schafts 52 zugewandte Gruppe 55 umfasst mehrere in regelmässigen Abständen zueinander am Schaft 52 angeordnete Verankerungselemente 31. In einem Abstand zu der Gruppe 55 ist eine weitere Gruppe 54 vorgesehen, die mehrere in regelmässigen Abständen zueinander am Schaft 52 angeordnete Verankerungselemente 11 umfasst.

Zu einer Gruppe 54 oder 55 können auch unterschiedliche Ausgestaltungen von Verankerungselementen 11 und 31 zusammengefasst werden. Weiter ist es zudem möglich, die Abstände der Verankerungselemente 11 und 31 zueinander innerhalb einer Gruppe 54 oder 55 zu variieren, was eine einfache Anpassung des Befestigungselementes 51 an örtliche Gegebenheiten sicherstellt.

Zum Setzen des Befestigungselementes 51 wird in dem Bauteil 44 zuerst ein Bohrloch 42 mit einem Bohrer erstellt, wobei der Nenndurchmesser N des erstellten Bohrlochs 42 kleiner als der Aussendurchmesser D1 des Verankerungselementes 11 sowie kleiner als der Aussendurchmesser D2 des Verankerungselementes 31 gewählt ist. Die Bohrlochtiefe T wird einerseits durch die erforderliche Verankerungslänge für das Befestigungselement 51 und andererseits durch den erforderlichen Raum vor dem Befestigungselement 51 zur Aufnahme von Bohrmehl im Bohrloch 42 bestimmt.

Anschliessend wird das Bohrloch 42 mit einer definierten Menge der aushärtbaren Masse 43 befüllt und dann das Befestigungselement 51 mit dem setzrichtungsseitigen Ende 56 des Schafts 52 voran in das Bohrloch 42 eingeführt, wobei das Einführen manuell oder auch maschinell erfolgt. Dabei streifen die Verankerungselemente 11 und 31 entlang der Bohrlochwandung, so dass daran anhaftendes Bohrmehl zum grössten Teil von diesen entfernt und in die aushärtbare Masse 43 eingemischt beziehungsweise zum Bohrlochgrund hin bewegt wird. Die Verankerungselemente 11 und 31 sind beispielsweise auf den Schaft 52 aufgeschoben oder werden z. B. auf diesen aufgeschraubt. Beim Einführen des Befestigungselementes 51 durchströmt und umspült die aushärtbare Masse 43 die Verankerungselemente 11 und 31 durch die Durchgangsöffnungen 17 und Ausnehmungen 15 beziehungsweise durch die Schlitze 33 und 35, so dass die aushärtbare Masse 43 und allenfalls darin befindliches Bohrmehl gleichmässig durchmischt wird und die Verankerungselemente 11 und 31 nach dem Aushärten der Masse 43 weitgehend vollständig in dieser eingebettet sind.

Alternativ wird zuerst das Befestigungselement 51 in das Bohrloch 42 eingeführt und anschliessend die aushärtbare Masse 43 eingebracht. In einer weiteren Alternative wird zuerst eine kleine, bestimmte Menge der aushärtbare Masse 43 in das Bohrloch 42 eingebracht, das Befestigungselement 51 in das Bohrloch 42 eingeführt und anschliessend ein noch verbleibender Freiraum des Bohrlochs 42 mit einer weiteren Menge der aushärtbaren Masse 43 aufgefüllt.

Weiter kann der Schaft 52 mit einer Injektionsbohrung versehen sein, durch welche die aushärtbare Masse 43 nach dem Einführen oder während demselben in das Bohrloch 42 einbringbar ist.

Vor dem Aushärten der aushärtbaren Masse 43 ist das Befestigungselement 51 bereits auf einem beschränkten Lastniveau belastbar, da die Verankerungselemente 11 und 31 das Befestigungselement 51 mechanisch im Bohrloch 42 verankern. Nach dem Aushärten der aushärtbaren Masse 43 ist das gesetzte Befestigungselement 51 auf das maximal zulässige Lastniveau belastbar.

Da der äussere Umfang 14 bzw. 34 der Verankerungselemente 11 bzw. 31 weiterhin zumindest bereichsweise in die Bohrlochwandung eingreift, steht eine ausreichende Kontaktfläche zur Verfügung, womit die Befestigungsanordnung 41 auch in gerissenem Beton anwendbar ist.

Das in der Fig. 5 gezeigte Befestigungselement 61 weist an seinem mit einem Gewinde als Aussenprofilierung 63 versehenen Schaft 62 eine Verankerungseinheit 72 auf, die von mehreren ringscheibenförmigen Verankerungselementen 71 gebildet ist, die jeweils an einem ihrer Randabschnitt 73 miteinander verbunden sind.

## Patentansprüche

1. Ringscheibenförmiges Verankerungselement (11; 31; 71) zur Anordnung an einem mit einer Aussenprofilierung (53) versehenen Schaft (52; 62) eines Befestigungselementes (51; 61) mit einer Durchführöffnung (12; 32) für den Schaft (52; 62), **gekennzeichnet durch**
zumindest eine zur Durchführöffnung (12; 32) hin offenen und zu dieser radial aussenliegenden Ausgleichsausnehmung (13; 33).

2. Verankerungselement nach Anspruch 1, **dadurch gekennzeichnet, dass** der äussere Umfang (14; 34) des Verankerungselementes (11; 31) mit einer Profilierung versehen ist.

3. Verankerungselement nach Anspruch 1 oder 2, **dadurch gekennzeichnet, dass** das Verankerungselement (11) in der Scheibenebene eine wellige Ausgestaltung aufweist.

4. Verankerungselement nach einem der Ansprüche 1 bis 3, **dadurch gekennzeichnet, dass** das Verankerungselement (11) in der Scheibenebene unterschiedliche Dicken aufweist, wobei optional die Dicke ausgehend von der Durchführöffnung (12) in radialer Richtung nach aussen zunimmt.

5. Verankerungselement nach einem der Ansprüche 1 bis 4**, dadurch gekennzeichnet, dass** im Verankerungselement (11) zumindest eine Durchgangsöffnung (17) für eine aushärtbare Masse (43) vorgesehen ist.

6. Verankerungselement nach einem der Ansprüche 1 bis 5, **dadurch gekennzeichnet, dass** das Verankerungselement (11; 31; 71) aus einem Metall, vorteilhaft in einem Stanz-/Biegeverfahren gefertigt ist.

7. Verankerungselement nach einem der Ansprüche 1 bis 5, **dadurch gekennzeichnet, dass** das Verankerungselement (11; 31; 71) aus einem Kunststoff, vorteilhaft in einem Spritzgussverfahren gefertigt ist.

8. Befestigungselement (51; 61), das mittels einer aushärtbaren Masse (43) in einem Bohrloch (42) verankerbar ist, mit einem Schaft (52; 62), der eine Aussenprofilierung (53; 63) aufweist, und mit zumindest einem ringscheibenförmiges Verankerungselement (11; 31; 71), das eine Durchführöffnung (12; 32) für den Schaft (52; 62) aufweist, **dadurch gekennzeichnet, dass** zumindest eine zur Durchführöffnung (12; 32) hin offene und zu dieser radial aussenliegende Ausgleichsausnehmung (13; 33).vorgesehen ist.

9. Befestigungselement nach Anspruch 8, **dadurch gekennzeichnet, dass** mehrere Verankerungselemente (11; 31) beabstandet zueinander an dem Schaft (52) vorgesehen sind, wobei die Verankerungselemente (11; 31) optional in regelmässigen Abständen zueinander am Schaft (52) angeordnet sind.

10. Befestigungselement nach Anspruch 8 oder 9, **dadurch gekennzeichnet, dass** verschiedene Ausgestaltungen von Verankerungselementen (11; 31) an einem Schaft (52) vorgesehen sind.

11. Befestigungselement nach einem der Ansprüche 8 bis 10, **dadurch gekennzeichnet, dass** zumindest zwei ringscheibenförmige Verankerungselemente (71) jeweils an einem ihrer Randabschnitt (73) miteinander zu einer Verankerungseinheit (72) verbunden sind.

12. Befestigungsanordnung (41) eines Befestigungselementes (51) in einem Bohrloch (42), das einen Nenndurchmesser (N) aufweist, mittels einer aushärtbaren Masse (43), wobei das Befestigungselement (51) einen Schaft (52) mit einer Aussenprofilierung (53) sowie zumindest ein ringscheibenförmiges Verankerungselement (11; 31) mit einer Durchführöffnung (12; 32) für den Schaft (52) und mit einem Aussendurchmesser (D1; D2) aufweist, der grösser als der Nenndurchmesser (N) des Bohrlochs (42) ist, **dadurch gekennzeichnet, dass** zumindest eine zur Durchführöffnung (12; 32) hin offene und zu dieser radial aussenliegende Ausgleichsausnehmung (13; 33) an dem Verankerungselement (11; 31) vorgesehen ist.
